# EUROPÄISCHE PATENTSCHRIFT

(11) **EP 0 937 323 B1**
(45) Veröffentlichungstag und Bekanntmachung des Hinweises auf die Patenterteilung: **24.01.2001**
(21) Anmeldenummer: 97949921.7
(22) Anmeldetag: 06.11.1997
(51) Int. Cl.: H02B 11/133

(54) **EINSCHIEBBARER GERÄTETRÄGER MIT EINER VERRIEGELUNGSEINRICHTUNG**
INSERTABLE EQUIPMENT CARRIER WITH A LOCKING DEVICE
SUPPORT D'APPAREILLAGE INSERABLE ET DOTE D'UN DISPOSITIF DE VERROUILLAGE

(30) Priorität: 06.11.1996 DE 19647747
(43) Veröffentlichungstag der Anmeldung: 25.08.1999
(73) Patentinhaber: SIEMENS AKTIENGESELLSCHAFT, 80333 München (DE)
(72) Erfinder: SCHMIDT, Mario, D-04275 Leipzig (DE)
(86) Internationale Anmeldenummer: DE9702666
(87) Internationale Veröffentlichungsnummer: WO9820589

(56) Entgegenhaltungen:
- EP-A- 0 109 544
- WO-A-91/03088
- DE-A- 4 313 647
- FR-A- 1 066 100
- US-A- 2 921 998

## Beschreibung

Die Erfindung betrifft einen einschiebbaren Geräteträger für eine Schaltanlage mit folgenden Merkmalen:
- ein auf dem Geräteträger angeordneter Hauptschalter,
- eine Trennkontaktanordnung zur Verbindung eines den Hauptschalter einschließenden Stromkreises mit ortsfesten Leitern der Schaltanlage bei feststehendem Geräteträger,
- eine an der Frontseite des Geräteträgers zugängliche Trennkontaktwelle zur Betätigung der Trennkontaktanordnung,
- eine Verriegelungseinrichtung zur gegenseitigen Verriegelung des Hauptschalters und der Trennkontaktanordnung,
- ein zu der Verriegelungseinrichtung gehörender Sperrschieber zur Freigabe bzw. Sperrung der Betätigung der Trennkontaktwelle,
- eine gleichfalls zu der Verriegelungseinrichtung gehörende, durch eine Betätigungswelle des Hauptschalters mittels eines Kupplungshebels betätigbare Riegelstange, die bei betätigtem Sperrschieber durch korrespondierende Riegelöffnungen des Geräteträgers und eines diesen tragenden Fachbodens der Schaltanlage verschiebbar ist.

Eine Geräteträger dieser Art ist durch die DE 43 13 647 A1 bekanntgeworden. Die zusammenwirkenden Teile sind dabei auf einen bestimmten Typ eines Hauptschalters abgestimmt. Dies bedeutet, daß je nach Größe des Hauptschalters zumindest einige Teile der Verriegelungseinrichtung unterschiedlich sind und deshalb die Montage der Verriegelungseinrichtung nur zusammen mit der Montage des Hauptschalters erfolgen kann.

Der Erfindung liegt hiervon ausgehend die Aufgabe zugrunde, die Verriegelungseinrichtung so auszubilden, daß sie zumindest teilweise vormontierbar ist, derart, daß eine Grundausführung eines Geräteträgers mit wesentlich geringerem Aufwand als bisher zu einem funktionsfähigen Geräteeeinschub für eine Schaltanlage komplettierbar ist.

Diese Aufgabe wird gemäß der Erfindung durch folgende weitere Merkmale gelöst:
- ein Lagerwinkel, der parallel zu diesem verschiebbar geführte Sperrschieber und ein zur Ausrichtung der Riegelstange auf die Riegelöffnung des Geräteträgers dienender Vorspannschieber bilden eine erste, am Geräteträger montierbare Baugruppe,
- ein mit dem Lagerwinkel zu verbindendes Lagerblech für die Betätigungswelle des Hauptschalters sowie die Riegelstange und ein Schaltbewegungen der Betätigungswelle auf die Riegelstange übertragender Kupplungshebel bilden eine zweite, dem Hauptschalter zugeordnete Baugruppe.

Somit können der Lagerwinkel und der Vorspannschieber grundsätzlich an dem Geräteträger montiert werden, ohne daß bereits feststeht, welcher Typ eines Hauptschalters ausgewählt wird. Dies erleichtert die serienmäßige Fertigung von Geräteträgern und ihre Ausrüstung zu funktionsfähigen Geräteinschüben erheblich.

Im Rahmen der Erfindung kann das Lagerblech wenigstens nahe seinem einen Ende eine fensterartige Öffnung aufweisen, während der Lagerwinkel ein zum Eingreifen in die fensterartige Öffnung bestimmtes Gegenstück besitzt. Durch diese Gestaltung wird beim Anfügen des Lagerbleches an den Lagerwinkel eine selbsttätige Ausrichtung und formschlüssige Verbindung erzielt, die durch ein einzelnes einfaches Sicherungselement wie Niet oder Blechschraube mit geringem Arbeitsaufwand gesichert werden kann.

Eine weitere Vereinfachung der Montage ist dadurch zu erzielen, daß das Lagerblech an beiden Enden mit einer fensterartigen Öffnung versehen ist und daß zum Durchtritt der Betätigungswellen unterschiedlicher Bauformen von Hauptschaltern wenigstens zwei dem jeweiligen Abstand vom Boden des Geräteträgers und dem Durchmesser der Betätigungswelle entsprechend bemessene Lageröffnungen vorgesehen sind. Hierdurch sind identische Teile wahlweise für wenigstens zwei Bauarten von Hauptschaltern verwendbar.

Als weitere Möglichkeit zur Vermeidung unterschiedlicher Teile kann im Rahmen der Erfindung die Riegelstange mit einem die Betätigungswelle des Hauptschalters übergreifenden Langloch versehen sein. Damit entfallen gesonderte Führungselemente für die Riegelstange.

Bei dem Zusammenfügen der erwähnten beiden Baugruppen sind die Riegelstange und der Sperrschieber miteinander in eine funktionelle Verbindung zu bringen. Dies wird nach einer Weiterbildung der Erfindung dadurch erreicht, daß der Sperrschieber eine Kulissenöffnung und die Riegelstange einen in die Kulissenöffnung eingreifenden Zapfen aufweist, derart, daß eine Verschiebung der Riegelstange durch Betätigung des Hauptschalters in Richtung seiner Einschaltstellung eine Verschiebung des Sperrschiebers in der Richtung der Trennkontaktwelle und bei blockierter Verschiebbarkeit des Sperrschiebers eine Auslenkung der Riegelstange entgegen der Vorspannung des Vorspannschiebers in eine gegenüber der Riegelöffnung im Boden des Geräteträgers verschobene Stellung bewirkt. Vorteilhaft wirkt es sich dabei aus, wenn an einem Ende der Kulissenöffnung zur Einführung des Zapfens der Riegelstange ein erweiterter Einführbereich vorgesehen ist.

Die Kulissenöffnung kann dabei eine geschlossene Kontur aufweisen, wobei der Einführbereich durch eine das eine Ende der Kulissenöffnung erfassende Abkantung des Sperrschiebers gebildet ist. Die Abkantung bildet dabei zugleich eine Führung der Riegelstange derart, daß der Zapfen im Eingriff mit der Kulissenöffnung gehalten wird.

Die Erfindung wird im folgenden anhand der in den Figuren dargestellten Ausführungsbeispieles näher erläutert.

Die Figur 1 zeigt in einer perspektivischen Darstellung einen Teil eines Geräteträgers mit einer fronteitig angeordneten Verriegelungseinrichtung.

In der Figur 2 ist die Verriegelungseinrichtung in einer rückseitigen Ansicht, d.h. mit gegenüber der Figur 1 umgekehrter Blickrichtung, bei ausgeschaltetem Hauptschalter dargestellt.

Die Figur 3 zeigt in einer der Figur 2 entsprechenden Darstellung den Zustand bei eingeschaltetem Hauptschalter.

In der Figur 4 ist, gleichfalls in der Darstellung gemäß der Figur 2, die Sperrung des Hauptschalters gegen Einschalten veranschaulicht, wenn ein Bedienungsschlüssel mit der Trennkontaktwelle im Eingriff steht.

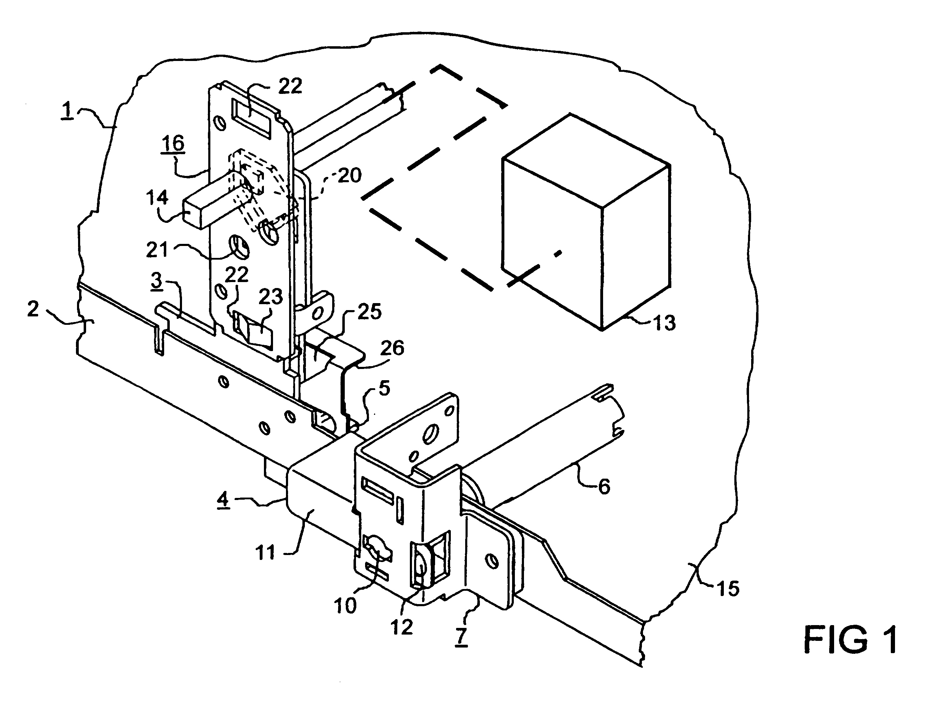

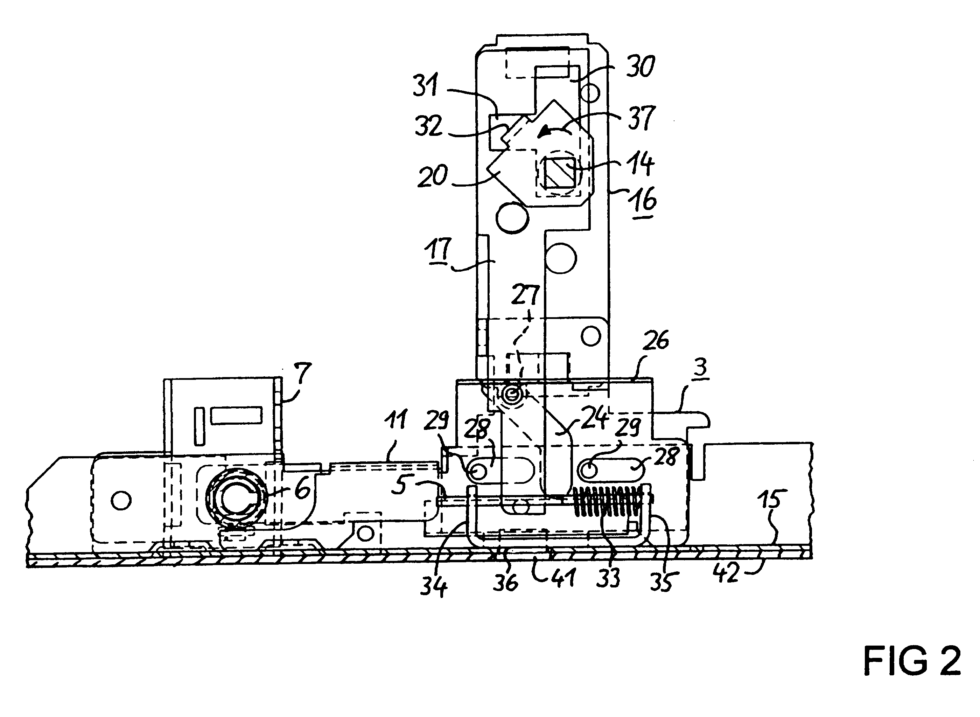

Der abgebrochen dargestellte Geräteträger 1 gemäß der Figur 1 dient zur Aufnahme nicht dargestellter Schalt- und Steuergeräte, wie dies allgemein bekannt ist. Frontseitig ist der Geräteträger 1 mit einer Abkantung 2 versehen, die als Anschlag und als Montagefläche für Komponenten des Geräteträgers 1 dient. Ein Lagerwinkel 3, ein Sperrschieber 4 und ein Vorspannschieber 5 bilden eine erste Baugruppe, die an dem Geräteträger 1 bereits angebracht werden kann, bevor die Geräteausrüstung montiert wird. Zu der Grundausrüstung des Geräteträgers gehört gleichfalls eine Trennkontakwelle 6, die sich rechtwinklig zu der frontseitigen Abkantung 2 erstreckt und der ein Schließblech 7 mit einer Schlüsselöffnung 10 zugeordnet ist. Durch die Schlüsselöffnung 10 ist ein Bedienungsschlüssel zum Betätigen der Trennkontaktwelle 6 einführbar, wie dies näher in der DE 43 13 661 C1 beschrieben ist. Der Sperrschieber 4 besitzt einen über die Abkantung 2 greifenden Sperrarm 11, der eine Durchtrittsöffnung 12 für den Bedienungsschlüssel der Trennkontaktwelle 6 besitzt. Der Vorspannschieber 5 ist in der Figur 1 nicht vollständig sichtbar. Auf seine Anordnung und Wirkungsweise wird noch im Zusammenhang mit den Figuren 2, 3 und 4 eingegangen.

Von den Schaltaufgaben der Geräteausrüstung des Geräteträgers 1 hängt insbesondere die Größe des zu verwendenden Hauptschalters ab. In der Figur 1 ist schematisch ein Hauptschalter 13 mit einer Betätigungswelle 14 angedeutet. Durch die Größe des Hauptschalters 13 ist der Abstand der Betätigungswelle 14 von einer Bodenfläche 15 des Geräteträgers 1 bestimmt. Somit kann die Betätigungswelle 14 bei Geräteträgern mit unterschiedlicher Geräteausrüstung eine unterschiedliche Lage einnehmen. Diese variablen Bedingungen werden durch eine zweite, an die Baugröße des Hauptschalters 13 angepaßte Baugruppe berücksichtigt, zu der im wesentlichen ein Lagerblech 16, eine Riegelstange 17 sowie ein die Bewegung der Betätigungswelle 14 auf die Riegelstange 17 übertragender Kupplungshebel 20 gehören. Das Lagerblech 16 ist so ausgebildet, daß es in zwei um 180° gedrehten Stellungen wahlweise an dem Lagerwinkel 3 anzubringen ist und hierbei unterschiedliche Lageröffnungen 21 für Betätigungswellen 14 benutzbar sind. Mittels ein und desselben Lagerbleches 16 können somit wenigstens zwei unterschiedliche Hauptschalter an dem Geräteträgers 1 montiert werden. Zur Verbindung mit dem Lagerwinkel 3 besitzt das Lagerblech 16 zwei fensterartige Öffnungen 22, während der Lagerwinkel 3 als Gegenstück für die fensterartigen Öffnungen mit einem dachartigen Durchzug 23 versehen ist. Diese Anordnung ergibt eine leicht herstellbare Verbindung mit guter Genauigkeit und guter Festigkeit gegen Verdrehung. Daher genügt unter Umständen eine einzige Schraube oder ein gleichwertiges Verbindungselement zur Verbindung des Lagerbleches 16 mit dem Lagerwinkel 3.

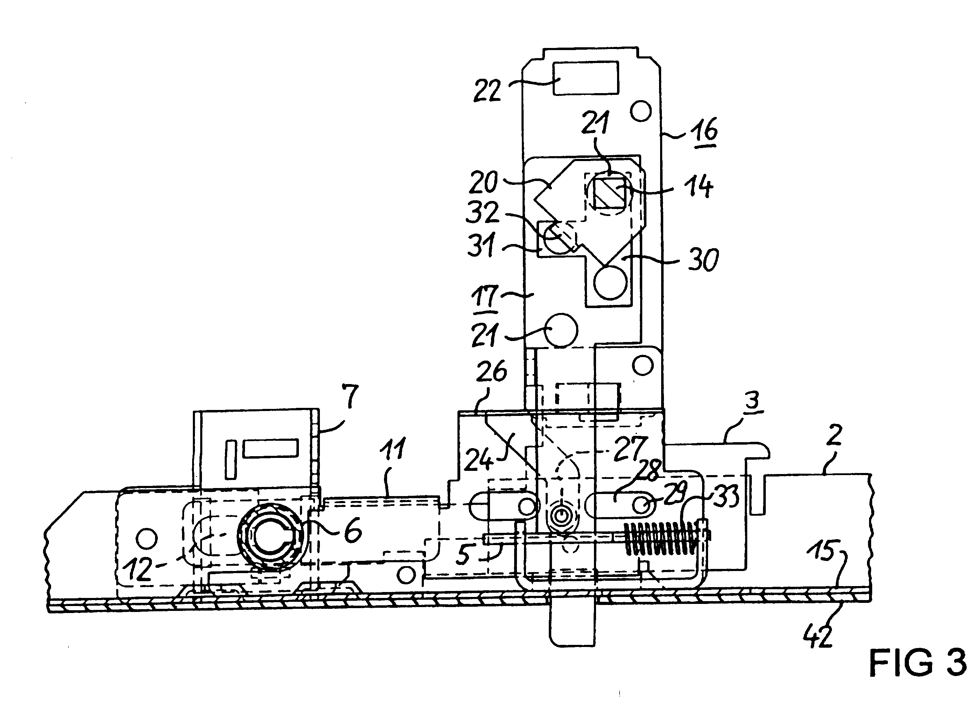

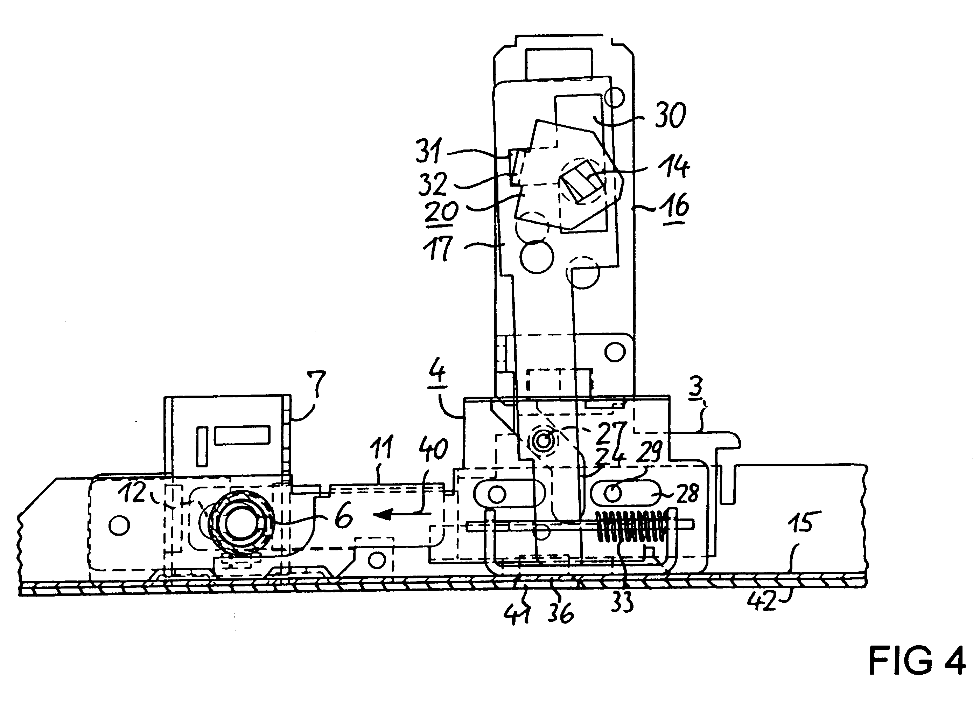

Anhand der Figur 2 werden nun zunächst diejenigen Teile der Verriegelungseinrichtung erläutert, die in der Figur 1 nicht oder nur teilweise sichtbar sind. In den Figuren 3 und 4 sind die gleichen Teile mit den übereinstimmenden Bezugszeichen versehen. Es sei noch einmal erwähnt, daß in den Figuren 2, 3 und 4 die Betrachtungsrichtung gegenüber der Figur 1 umgekehrt gewählt ist, um die bei frontseitiger Betrachtung entsprechend der Figur 1 verdeckten Teile sichtbar zu machen.

Als ein für die Funktion der Verriegelungseinrichtung wesentliches Merkmal des Sperrschiebers 4 zeigt die Figur 2 eine Kulissenöffnung 24, die am oberen Ende einen erweiterten Einführungsbereich 25 für die Riegelstange 17 besitzt. Aus einem Vergleich der Figuren 1 und 2 ist ersichtlich, daß der Einführungsbereich 25 durch eine Abwinklung 26 des Sperrschiebers 4 gebildet ist. Zum Eingreifen in die Kulissenöffnung 24 ist die Riegelstange 17 mit einem Zapfen 27 versehen. Durch das Maß der Abwinklung ist erreicht, daß die Riegelstange an der Abwinklung 26 geführt und hierdurch der Zapfen 27 in Eingriff mit der Kulissenöffnung 24 gehalten wird. Zur verschiebbaren Führung des Sperrschiebers 4 dienen Langlöcher 28, in die Führungsstifte 29 am Lagerwinkel 3 eingreifen. An ihrem oberen Ende besitzt die Riegelstange 17 ein Langloch 30 zum Übergreifen der Betätigungswelle 14. Seitlich weist das Langloch 30 eine Erweiterung 31 auf, in die eine als Mitnehmer dienende Abwinklung 32 des Kupplungshebels 20 eingreift. Das untere Ende der Riegelstange 17 liegt an einer Führungskante des Vorspannschiebers 5 an, der durch eine Druckfeder 33 nach links an einem Anschlag angelegt ist. Lagerschenkel 34 und 35 des Lagerwinkels 3 bilden Führungen und Anschläge für den Vorspannschieber 5.

Die Figur 2 stellt die Grundstellung der Verriegelungseinrichtung bei ausgeschaltetem Hauptschalter 13 (Figur 1) dar. Das untere Ende der Riegelstange 17 steht dabei mit einem Abstand einer Riegelöffnung 36 in der Bodenfläche 15 des Geräteträgers 1 (Figur 1) gegenüber. Wird nun der Hauptschalter 13 durch Drehung der Betätigungswelle 14 in der Richtung des Pfeiles 37 eingeschaltet, so wird die Riegelstange 17 nach unten verschoben. Der Zapfen 27 betätigt dabei den Sperrschieber 4 und verschiebt diesen in der Richtung des Pfeiles 40, bis die in der Figur 3 gezeigte Stellung erreicht ist. In dieser ragt die Riegelstange 17 durch die Riegelöffnung 36 sowie eine Riegelöffnung 41 hindurch, die in einem in dem Figuren 2, 3 und 4 angedeuteten Fachboden 42 angeordnet ist. Der Geräteträger 1 ist hierdurch gegen eine Verschiebung und Entnahme aus der Schaltanlage gesichert. Zugleich verdeckt der Schenkel 11 des Sperrschiebers 4 die Schlüsselöffnung 10 (Figur 1).

Eine weitere Funktion der Verriegelungseinrichtung ist in der Figur 4 veranschaulicht. Der hier gezeigten Stellung der Teile liegt der Zustand zugrunde, daß der erwähnte Bedienungsschlüssel für die Trennkontaktwelle 6 in der Schlüsselöffnung 10 steckt. In diesem Fall ist das Einschalten des Hauptschalters unzulässig und wird durch das Zusammenwirken der Riegelstange 17 mit der Kulissenöffnung 24 und dem Vorspannschieber 5 verhindert. Dies geschieht dadurch, daß der Sperrschieber 4 bei dem Versuch, die Betätigungswelle 14 zu drehen, mit seiner Sperrzunge gegen den erwähnten Betätigungsschlüssel stößt, und zwar bevor das untere Ende der Riegelstange 17 in die Riegelöffnung 36 eintreten kann. Die Kulissenöffnung 24 wirkt nun als feststehende Führung für den Zapfen 27 der Riegelstange 17, die entgegen der Wirkung der Druckfeder 33 nach rechts ausgelenkt wird, wie dies die Figur 4 zeigt. Dadurch kann die Riegelstange 17 nicht in die Riegelöffnung 36 eintreten, sondern stößt gegen die Bodenfläche 15. Eine weitere Drehung der Betätigungswelle 14 ist daher nicht möglich, weshalb der Hauptschalter 13 seine Einschaltstellung nicht erreichen kann.

## Patentansprüche

1. Einschiebbarer Geräteträger (1) für eine Schaltanlage mit folgenden Merkmalen:
- ein auf dem Geräteträger (1) angeordneter Hauptschalter (13),
- eine Trennkontaktanordnung zur Verbindung eines den Hauptschalter (13) einschließenden Stromkreises mit ortsfesten Leitern der Schaltanlage bei feststehendem Geräteträger (1),
- eine an der Frontseite des Geräteträgers (1) zugängliche Trennkontaktwelle (6) zur Betätigung der Trennkontaktanordnung,
- eine Verriegelungseinrichtung zur gegenseitigen Verriegelung des Hauptschalters (13) und der Trennkontaktanordnung,
- ein zu der Verriegelungseinrichtung gehörender Sperrschieber (4) zur Freigabe bzw. Sperrung der Betätigung der Trennkontaktwelle (6),
- eine gleichfalls zu der Verriegelungseinrichtung gehörende, durch eine Betätigungswelle (14) des Hauptschalters (13) mittels eines Kupplungshebels (20) betätigbare Riegelstange (17), die bei betätigtem Sperrschieber (4) durch korrespondierende Riegelöffnungen (36, 41) des Geräteträgers (1) und eines diesen tragenden Fachbodens (42) der Schaltanlage verschiebbar ist,
**gekennzeichnet durch** folgende weitere Merkmale:
- ein Lagerwinkel (3), der parallel zu diesem verschiebbar geführte Sperrschieber (4) und ein zur Ausrichtung der Riegelstange (17) auf die Riegelöffnung (36) des Geräteträgers (1) dienender Vorspannschieber (5) bilden eine erste, am Geräteträger (1) montierbare Baugruppe,
- ein mit dem Lagerwinkel (3) zu verbindendes Lagerblech (16) für die Antriebswelle (14) des Hauptschalters (13) sowie die Riegelstange (17) und ein Schaltbewegungen der Antriebswelle (14) auf die Riegelstange (17) übertragender Kupplungshebel (20) bilden eine zweite, dem Hauptschalter (13) zugeordnete Baugruppe.

2. Geräteträger nach Anspruch 1,
**dadurch gekennzeichnet**, daß
das Lagerblech (16) wenigstens nahe seinem einen Ende eine fensterartige Öffnung (22) aufweist und daß der Lagerwinkel (3) ein zum Eingreifen in die fensterartige Öffnung (22) bestimmtes Gegenstück (23) besitzt.

3. Geräteträger nach Anspruch 2,
**dadurch gekennzeichnet**, daß
das Lagerblech (16) an beiden Enden mit einer fensterartigen Öffnung (22) versehen ist und daß zum Durchtritt der Betätigungswellen (14) unterschiedlicher Bauformen von Hauptschaltern (13) wenigstens zwei dem jeweiligen Abstand vom Boden (15) des Geräteträgers (1) und dem Durchmesser der Antriebswelle (14) entsprechend bemessene Lageröffnungen (21) vorgesehen sind.

4. Geräteträger nach einem der vorangehenden Ansprüche,
**dadurch gekennzeichnet**, daß
die Riegelstange (17) mit einem die Betätigungswelle (14) des Hauptschalters (13) übergreifenden Langloch (30) versehen ist.

5. Geräteträger nach einem der Ansprüche 1 bis 4,
**dadurch gekennzeichnet**, daß
der Sperrschieber (4) eine Kulissenöffnung (24) und die Riegelstange (17) einen in die Kulissenöffnung (24) eingreifenden Zapfen (27) aufweist, derart, daß eine Verschiebung der Riegelstange (17) durch Betätigung des Hauptschalters (13) in Richtung seiner Einschaltstellung eine Verschiebung des Sperrschiebers (4) in der Richtung der Trennkontaktwelle (6) und bei blockierter Verschiebbarkeit des Sperrschiebers (4) eine Auslenkung der Riegelstange (17) entgegen der Vorspannung des Vorspannschiebers (5) in eine gegenüber der Riegelöffnung (36) im Boden (15) des Geräteträgers (1) verschobene Stellung bewirkt.

6. Geräteträger nach Anspruch 5,
**dadurch gekennzeichnet**, daß
an einem Ende der Kulissenöffnung (24) zur Einführung des Zapfens (27) der Riegelstange (17) ein erweiterter Einführungsbereich (25) vorgesehen ist.

7. Geräteträger nach Anspruch 6,
**dadurch gekennzeichnet**, daß
die Kulissenöffnung (24) eine geschlossene Kontur aufweist und daß der Einführungsbereich (25) durch eine das eine Ende der Kulissenöffnung (24) erfassende Abkantung (26) des Sperrschiebers (4) gebildet ist.

## Claims

1. Insertable equipment carrier (1) for a switchgear having the following features:
- a main switch (13) that is arranged on the equipment carrier (1),
- an isolating-contact arrangement for connecting a circuit, which includes the main switch (13), to stationary conductors of the switchgear when the equipment carrier (1) is fixed,
- an isolating-contact shaft (6) that is accessible from the front side of the equipment carrier (1) for actuating the isolating-contact arrangement,
- a locking device for interlocking the main switch (13) and the isolating-contact arrangement,
- a blocking slide (4) that pertains to the locking device for enabling and blocking the actuation of the isolating-contact shaft (6),
- a locking bar (17) that also pertains to the locking device and which can be actuated by an actuating shaft (14) of the main switch (13) by means of a coupling lever (20) and which, when the blocking slide (4) is actuated, can be displaced through corresponding locking openings (36, 41) of the equipment carrier (1) and of a compartment base (42) of the switchgear that supports the latter, characterised by the following further features:-
- a bearing bracket (3), the blocking slide (4) that is guided in a displaceable manner parallel to the latter, and a pretensioning slide (5) that is used to align the locking bar (17) with the locking opening (36) of the equipment carrier (1) form a first assembly that can be installed on the equipment carrier (1),
- a bearing plate (16), which can be connected to the bearing bracket (3), for the driving shaft (14) of the main switch (13), and also the locking bar (17) and a coupling lever (20) that transmits switching movements of the driving shaft (14) to the locking bar (17) form a second assembly that is associated with the main switch (13).

2. Equipment carrier according to claim 1,
characterised in that the bearing plate (16), at least close to its one end, has a window-like opening (22), and in that the bearing bracket (3) has a counterpart (23) that is intended to engage into the window-like opening (22).

3. Equipment carrier according to claim 2,
characterised in that the bearing plate (16) is provided with a window-like opening (22) at both ends, and in that for the through-passage of the actuating shafts (14) of different designs of main switches (13) at least two bearing openings (21) are provided that have dimensions corresponding to the respective distance from the base (15) of the equipment carrier (1) and the diameter of the driving shaft (14).

4. Equipment carrier according to one of the preceding claims, characterised in that the locking bar (17) is provided with an elongated hole (30) that overlaps the actuating shaft (14) of the main switch (13).

5. Equipment carrier according to one of claims 1 to 4, characterised in that the blocking slide (4) has a connecting-link opening (24) and the locking bar (17) has a peg (27) that engages into the connecting-link opening (24) in such a way that a displacement of the locking bar (17) as a result of actuation of the main switch (13) in the direction of its on-position gives rise to a displacement of the blocking slide (4) in the direction of the isolating-contact shaft (6) and with blocked displaceability of the blocking slide (4) gives rise to a deflection of the locking bar (17), in opposition to the pretension of the pretensioning slide (5), into a position that is displaced in relation to the locking opening (36) in the base (15) of the equipment carrier (1).

6. Equipment carrier according to claim 5,
characterised in that an extended entry area (25) is provided at one end of the connecting-link opening (24) for the introduction of the peg (27) of the locking bar (17).

7. Equipment carrier according to claim 6,
characterised in that the connecting-link opening (24) has a closed contour, and in that the entry area (25) is formed by a folded edge (26) of the blocking slide (4) covering the one end of the connecting-link opening (24).

## Revendications

1. Support (1) d'appareil pour une installation de coupure, pouvant être inséré et comportant les caractéristiques suivantes :
- un interrupteur (13) principal monté sur le support (1) d'appareil,
- un dispositif de contact de séparation pour relier un circuit de courant incluant l'interrupteur (13) principal à des conducteurs fixes de l'installation de coupure lorsque le support (1) d'appareil est immobile,
- un arbre (6) de contact de séparation, qui est accessible de la face frontale du support (1) d'appareil et qui sert à actionner le dispositif de contact de séparation,
- un dispositif de verrouillage pour verrouiller mutuellement l'interrupteur principal et le dispositif de contact de séparation,
- un loquet (4) de blocage qui fait partie du dispositif de verrouillage et qui sert à dégager ou à bloquer l'actionnement de l'arbre (6) de contact de séparation,
- une barre (17) de verrouillage, qui fait partie également du dispositif de verrouillage, qui peut être actionnée par un arbre (14) d'actionnement de l'interrupteur (13) principal au moyen d'un levier (20) de couplage et qui, lorsque le loquet (4) de blocage est actionné, peut coulisser dans des ouvertures (36, 41) de verrouillage correspondantes du support (1) d'appareil et d'un fond (42) de réception de l'installation de coupure portant le support d'appareil,
caractérisé par les caractéristiques supplémentaires suivantes :
- une équerre (3) de montage, le loquet (4) de blocage coulissant parallèlement à l'équerre et un loquet (5) de précontrainte servant à orienter la barre (17) de verrouillage vers l'ouverture (36) de verrouillage du support (1) d'appareil forment un premier module pouvant être monté sur le support (1) d'appareil,
- une tôle (16) de montage, à relier à l'équerre (3) de montage, pour l'arbre (14) d'entraînement de l'interrupteur principal, ainsi que la barre (17) de verrouillage et un levier (20) de couplage transmettant des déplacements de coupure de l'arbre (14) d'entraînement à la barre (17) de verrouillage forment un deuxième module associé à l'interrupteur (13) principal.

2. Support d'appareil suivant la revendication 1, caractérisé en ce que la tôle (16) montage comporte au moins à proximité de l'une de ses extrémités une ouverture (22) du genre d'une fenêtre et en ce que l'équerre (3) de montage a une pièce (23) antagoniste prévue pour rentrer dans l'ouverture (22) du genre d'une fenêtre.

3. Support d'appareil suivant la revendication 2, caractérisé en ce que la tôle (16) de montage est munie à ses deux extrémités d'une ouverture (22) du genre d'une fenêtre et en ce qu'il est prévu pour le passage d'arbres (14) d'actionnement d'interrupteurs (13) principaux de modes de construction différents au moins deux ouvertures (21) de montage dont la dimension correspond à la distance par rapport au fond (15) du support (1) d'appareil et au diamètre de l'arbre (14) d'entraînement.

4. Support d'appareil suivant l'une des revendications précédentes, caractérisé en ce que la barre (17) de verrouillage est munie d'un trou (30) oblong par lequel passe l'arbre (14) d'actionnement de l'interrupteur (13) principal.

5. Support d'appareil suivant l'une des revendications 1 à 4, caractérisé en ce que le loquet (4) de blocage comporte une ouverture (24) de coulisse et en ce que la barre (17) de verrouillage comporte un tenon (27) rentrant dans l'ouverture (24) de coulisse, de telle manière qu'un coulissement de la barre (17) de verrouillage par actionnement de l'interrupteur (13) principal vers sa position de fermeture provoque un coulissement du loquet (4) de blocage vers l'arbre (6) de contact de séparation et, lorsque toute possibilité de coulissement du loquet (4) de blocage est bloquée, une déviation de la barre (17) de verrouillage à l'encontre de la précontrainte du loquet (5) de précontrainte à une position décalée par rapport à l'ouverture (36) de verrouillage dans le fond (15) du support (1) d'appareil.

6. Support d'appareil suivant la revendication 5, caractérisé en ce qu'il est prévu à une extrémité de l'ouverture (24) de coulisse, pour l'introduction du tenon (27) de la barre (17) de verrouillage, une zone (25) d'introduction élargie.

7. Support d'appareil suivant la revendication 6, caractérisé en ce que l'ouverture (24) de coulisse a un contour fermé et en ce que la zone (25) d'introduction est formée par un repli du loquet (4) de blocage couvrant une extrémité de l'ouverture (24) de coulisse.
